# EUROPÄISCHE PATENTSCHRIFT

(11) **EP 2 332 747 B1**
(45) Veröffentlichungstag und Bekanntmachung des Hinweises auf die Patenterteilung: **09.08.2017**
(21) Anmeldenummer: 10188299.1
(22) Anmeldetag: 21.10.2010
(51) Int. Cl.: B60C 11/13

(54) **Laufstreifenprofil eines Fahrzeugluftreifens**
Run strip profile of a vehicle tyre
Profil de bande de roulement d'un bandage pneumatique de véhicule

(30) Priorität: 09.12.2009 DE 102009044846
(43) Veröffentlichungstag der Anmeldung: 15.06.2011
(73) Patentinhaber: Continental Reifen Deutschland GmbH, 30165 Hannover (DE)
(72) Erfinder: Lacko, Michal, 02001, Puchov (SK); Heyden, Arne, 30167, Hannover (DE)
(74) Vertreter: Finger, Karsten

(56) Entgegenhaltungen:
- WO-A1-2011/036540
- JP-A- 2002 019 420
- US-A1- 2001 032 691
- US-A1- 2007 240 801

## Beschreibung

Die Erfindung betrifft ein Laufstreifenprofil eines Fahrzeugluftreifens mit radial erhabenen Profilelementen und mit Rillen, welche die Profilelemente in axialer Richtung A des Reifens voneinander trennen und welche jeweils mit zwei in radialer Richtung R des Fahrzeugreifens aus dem Rillengrund bis zu der die Straßenkontaktoberfläche bildenden Mantelfläche des Fahrzeugreifens sich erstreckenden Rillenwänden ausgebildet sind, von denen jeweils eine Rillenwand die zur Rille hin weisende Flanke eines der durch die Rille von einander getrennten Profilelemente bildet.

Derartige Fahrzeugluftreifen sind bekannt. Beim Befahren von losen Untergründen, beispielsweise auf Schnee oder auf Matsch is die durch reine Reibungskraft übertragende Kraft reduziert und die Traktionseigenschaft des Fahrzeugreifens wird negativ beeinflusst. Die Traktion eines Reifens auf Schnee oder auf Matsch ist eine für leistungsstarke Fahrzeugreifen wichtige Eigenschaft insbesondere für Winterreifen. Gute Traktion verbessert dabei Fahreigenschaften, ermöglicht eine Reduktion des Treibstoffverbrauches und eine Erhöhung der Fahrsicherheit.

Aus der US 2007/0240801 A1 ist ein Laufstreifenprofil eines Fahrzeugluftreifens mit radial erhabenen Profilelementen bekannt, bei welchem in Rillenwänden zusätzliche Absätze ausgebildet sind, die sich von der radial äußeren Oberfläche des Laufstreifenprofil bis zum Rillengrund erstrecken. Zwei hintereinander angeordnete Absätze begrenzen einen Abschnitt der Rillenwand, welcher sich ausgehend von der radial äußeren Oberfläche zum Rillengrund hin erstreckt.

Der Erfindung liegt die Aufgabe zugrunde, bei derartigen Fahrzeugluftreifen in einfacher Weise die Traktion auf losem Untergrund, insbesondere auf Schnee und Matsch, zu verbessern.

Erfindungsgemäß wird die Aufgabe durch die Ausbildung eines Laufstreifenprofils eines Fahrzeugluftreifens mit radial erhabenen Profilelementen und mit Rillen, welche die Profilelemente in axialer Richtung A des Reifens voneinander trennen und welche jeweils mit zwei in radialer Richtung R des Fahrzeugreifens aus dem Rillengrund bis zu der die Straßenkontaktoberfläche bildenden Mantelfläche des Fahrzeugreifens sich erstreckenden Rillenwänden ausgebildet sind, von denen jeweils eine Rillenwand die zur Rille hin weisende Flanke eines der durch die Rille von einander getrennten Profilelemente bildet, bei dem in wenigstens einer Rillenwand eine aus der Rillenwand in die Rille hinein ragende Erhebung ausgebildet ist, die sich zwischen einem radial äußeren und einem radial inneren Erstreckungsende linienförmig in radialer Richtung R von radial innen nach radial außen auf der Rillenwand erstreckt und die aus einem radial inneren Erstreckungsabschnitt und aus einem sich daran anschließenden radial äußeren Erstreckungsabschnitt ausgebildet ist,
wobei sich der radial äußere Erstreckungsabschnitt vom radial äußeren Erstreckungsende der linienförmigen Erhebung in radialer Richtung R nach innen mit einer Erstreckungsrichtungskomponente in Umfangsrichtung U mit Orientierung in eine erste Drehrichtung des Fahrzeugreifens bis zum radial inneren Erstreckungsabschnitt erstreckt und wobei der radial innere Erstreckungsabschnitt sich vom radial inneren Erstreckungsende der linienförmigen Erhebung in radialer Richtung R nach außen mit einer Erstreckungsrichtungskomponente in Umfangsrichtung U mit Orientierung in diese erste Drehrichtung des Fahrzeugreifens bis zum radial äußeren Erstreckungsabschnitt erstreckt, gemäß den Merkmalen von Anspruch 1 gelöst, bei dem die im radial äußeren Erstreckungsende an den äußeren Erstreckungsabschnitt angelegte Tangente tₐ und die im radial inneren Erstreckungsende an den inneren Erstreckungsabschnitt angelegte Tangente tᵢ einen Öffnungswinkel α einschließen und die diesen Öffnungswinkel α Halbierende h ausgehend vom Schnittpunkt der beiden Tangenten in Richtung der beiden Erstreckungsenden in radialer Richtung R des Reifens ansteigt und einen Winkel β zur Umfangsrichtung U einschließt mit 80° ≥ β > 0°.

Diese Ausbildung ermöglicht ein zusätzliches hakenförmiges Eingreifen der linienförmigen Elemente in Schnee und Schneematsch und hierdurch eine bessere Griffwirkung. Die Erhöhungen bilden zusätzliche Griffkanten in den Rillen und bewirken bei Drehbewegung des Fahrzeugreifens um seine Achse in die Drehrichtung, in der die beiden Erstreckungsenden der beiden Erstreckungsabschnitte die in Drehrichtung vorderen Abschnitte der Erhebung bilden, ein geradezu schaufelförmiges oder hakenförmiges Eingreifen in den losen Untergrund, wie z.B. in Schnee oder Matsch. Es erfolgt eine regelrechte Verzahnung der Reifenoberfläche mit dem Schnee in der Rille ohne die Funktionsfähigkeit der Rille wesentlich zu beeinträchtigen. Es entsteht eine Verzahnung zwischen Autoreifen und Schnee bzw. Matsch, wodurch die übertragene Traktionskraft erhöht wird. Auf Schnee wird durch die Verdichtung des Schnees in der hakenförmigen Öffnung eine Art Formschluss erzeugt, die zusätzlich zur Kraftübertragung beiträgt.

Besonders vorteilhaft ist die Ausbildung gemäß den Merkmalen von Anspruch 2, wobei die erste Drehrichtung die Drehrichtung des - insbesondere drehrichtungsgebundenen - Fahrzeugreifens bei Rückwärtsfahrt ist. Die Erhebungen können hierdurch sehr zuverlässig die Traktion verbessern bei Aufrechterhaltung guter Aquaplaningeigenschaften.

Besonders vorteilhaft ist die Ausbildung gemäß den Merkmalen von Anspruch 3, wobei wenigstens einer der beiden - insbesondere beide - Erstreckungsabschnitte geradlinig verlaufend ausgebildet ist. Hierdurch wird in einfacher Weise eine gezielte Feineinstellung der wirksamen Traktionskraftübertragung ermöglicht.

Besonders vorteilhaft ist die Ausbildung gemäß den Merkmalen von Anspruch 4, wobei die linienförmige Erhebung mit einem V-förmigen Konturverlauf ausgebildet ist, bei dem jeder der beiden Erstreckungsabschnitte jeweils einen Schenkel der V-Form bildet. Hierdurch wird in einfacher Weise eine gezielte Feineinstellung der wirksamen Traktionskraftübertragung ermöglicht.

Besonders vorteilhaft ist die Ausbildung gemäß den Merkmalen von Anspruch 5, wobei wenigstens einer der beiden - insbesondere beide - Erstreckungsabschnitte zum anderen Erstreckungsabschnitt hin gekrümmt verlaufend ausgebildet ist. Hierdurch wird in einfacher Weise eine sehr große Eingriffsfläche im Bereich des gekrümmten Erstreckungsabschnittes geschaffen und somit eine erhöhte Kraftübertragung ermöglicht.

Besonders vorteilhaft ist die Ausbildung gemäß den Merkmalen von Anspruch 6, wobei die linienförmige Erhebung mit einem U-förmigen Konturverlauf ausgebildet ist, bei dem jeder der beiden Erstreckungsabschnitte jeweils einen Schenkel der U-Form bildet. Hierdurch wird in einfacher Weise eine sehr große Eingriffsfläche im Bereich des gekrümmten Erstreckungsabschnittes geschaffen und somit eine erhöhte Kraftübertragung ermöglicht.

Besonders vorteilhaft ist die Ausbildung gemäß den Merkmalen von Anspruch 7, wobei die Erstreckungslänge des radial äußeren Erstreckungsabschnitts der linienförmigen Erhebung größer ist als die Erstreckungslänge des radial inneren Erstreckungsabschnitts. Dies ermöglicht eine Maximierung der Aufnahme des zu verdichtenden Mediums (wie Schnee oder Matsch) und somit eine Optimierung der Traktion.

Besonders vorteilhaft ist die Ausbildung gemäß den Merkmalen von Anspruch 8, wobei die im radial äußeren Erstreckungsende an den äußeren Erstreckungsabschnitt angelegte Tangente tₐ und die im radial inneren Erstreckungsende an den inneren Erstreckungsabschnitt angelegte Tangente tᵢ einen Öffnungswinkel α einschließen mit 90°> α, insbesondere mit 60° ≥ α ≥ 30°. Die Ausbildung ermöglicht eine optimierte Ausrichtung des Kraftvektors in die zur Sicherstellung der erforderlichen Kraftübertragung gewünschte Richtung.

Besonders vorteilhaft ist die Ausbildung gemäß den Merkmalen von Anspruch 9, wobei die im radial äußeren Erstreckungsende an den äußeren Erstreckungsabschnitt angelegte Tangente tₐ und die im radial inneren Erstreckungsende an den inneren Erstreckungsabschnitt angelegte Tangente tᵢ einen Öffnungswinkel α einschließen und die diesen Öffnungswinkel α Halbierende h ausgehend vom Schnittpunkt der beiden Tangenten in Richtung der beiden Erstreckungsenden in radialer Richtung R des Reifens ansteigt und einen Winkel β zur Umfangsrichtung U einschließt mit 80° ≥ β > 0°, insbesondere mit 45° ≥ β > 5°. Hierdurch wird eine besonders effektive Aufnahme des zu verdichtenden Mediums ermöglicht.

Besonders vorteilhaft ist die Ausbildung gemäß den Merkmalen von Anspruch 10, wobei in der Rillenwand über den Umfang des Fahrzeugreifens verteilt mehrere derartige in die Rille hinein ragende erhabene Erhebungen ausgebildet sind, - die insbesondere in ihrer radialen Position im Reifen zumindest teilweise unterschiedlich ausgebildet sind-. Dies ermöglicht die Sicherstellung einer maximalen Kraftübertragung über den Umfang des Reifens hinweg bei optimaler Anpassungsmöglichkeit an bestimmte Beschaffenheiten eines speziellen Fahrbahnuntergrundes und an umweltspezifische Einsatzbedingungen.

Die Erfindung wird im Folgenden an Hand der in den Figuren 1 bis 6 dargestellten Ausführungsbeispiele näher erläutert. Hierin zeigen
- Fig.1: Draufsicht auf einen Abschnitt eines Fahrzeugluftreifens mit Profilblockreihen am Beispiel eines Pkw-Reifens,
- Fig.2: einen Querschnitt des Laufstreifenprofils von Fig.1 gemäß dem Schnitt II-II von Fig.1,
- Fig.3: einen Querschnitt durch das Laufstreifenprofil von Fig.1 gemäß Schnitt III-III von Fig.1,
- Fig.4: eine vergrößerte Darstellung des in Fig.3 dargestellten Details IV zur Erläuterung der Ausbildung der linienförmigen Erhebung,
- Fig.5: eine alternative Ausbildung der Anordnung derartiger hakenförmiger, linienförmiger Erhebungen gemäß Schnitt III-III von Fig.1 und
- Fig.6: eine Darstellung einer alternativen Ausbildung einer linienförmigen Erhebung analog der Darstellung von Fig.4.

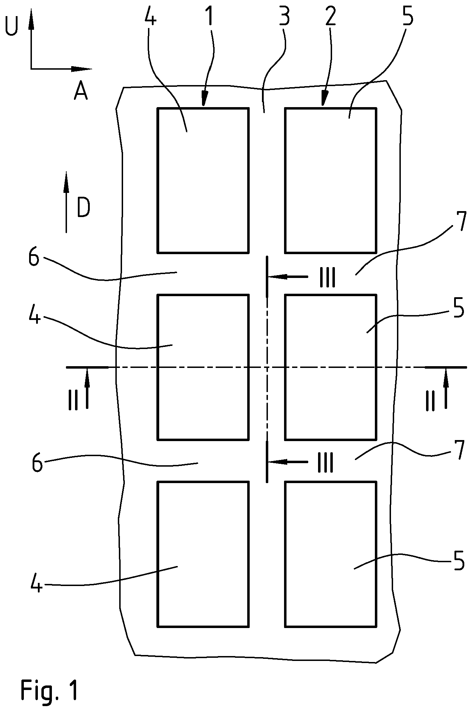

Die Figuren 1 bis 4 zeigen einen in axialer Richtung A eines Fahrzeugluftreifens gewählten Erstreckungsabschnitt eines Umfangsabschnittes eines Laufstreifenprofils eines Fahrzeugluftreifens für Pkw-Reifen mit Wintereigenschaften. Der gezeigte axiale Erstreckungsbereich liegt innerhalb der Bodenaufstandsbreite des Laufstreifenprofils.

Das Laufstreifenprofil ist in bekannter Weise - wie in Fig. 1 dargestellt - mit einer in Umfangsrichtung U des Fahrzeugluftreifens über den gesamten Umfang erstreckten Profilblockreihe 1 und mit einer in Umfangsrichtung U des Fahrzeugluftreifens über den gesamten Umfang erstreckten Profilblockreihe 2 ausgebildet. Die Profilblockreihe 1 und die Profilblockreihe 2 sind durch eine über den Umfang des Fahrzeugluftreifens erstreckte und in Umfangsrichtung U ausgerichtete Umfangsrille 3 in axialer Richtung A voneinander beabstandet. Die Profilblockreihe 1 ist in bekannter Weise aus einer Vielzahl von in Umfangsrichtung U hintereinander angeordneten und jeweils durch Querrillen 6 voneinander beabstandeten Profilblockelementen 4 ausgebildet. Die Profilblockreihe 2 ist in bekannter Weise aus einer Vielzahl von in Umfangsrichtung U hintereinander angeordneten und jeweils durch Querrillen 7 voneinander beabstandeten Profilblockelementen 5 ausgebildet.

Wie den Figuren 1 bis 3 zu entnehmen ist, sind die Profilblockelemente 4 und 5 in radialer Richtung R nach außen von der die Bodenkontaktoberfläche bildenden Mantelfläche 9 des Fahrzeugluftreifens begrenzt. Die Umfangsrille 3 ist nach radial innen mit einem über den gesamten Umfang des Fahrzeugluftreifens erstreckt ausgebildeten und in Umfangsrichtung U ausgerichteten Rillengrund 8 bekannter Art begrenzt. Die Umfangsrille 3 ist zur Profilblockreihe 4 hin mit einer sich aus dem Rillengrund 3 nach radial außen bis zu der die Bodenkontaktoberfläche bildenden, die Profilblockelemente 4 der Profilblockreihe 1 nach radial außen begrenzenden Mantelfläche 9 in radialer Richtung R nach außen erstreckten Rillenwand 10 und zur Profilblockreihe 2 hin mit einer sich aus dem Rillengrund 8 nach radial außen bis zu der die Bodenkontaktoberfläche bildenden, die Profilblockelemente 5 der Profilblockreihe 2 nach radial außen begrenzenden Mantelfläche 9 in radialer Richtung R nach außen erstreckten Rillenwand 11 begrenzt.
Die Rillenwand 10 bildet dabei die zur Umfangsrille 3 hin gerichtete Flanke der Profilblockelemente 4 der Profilblockreihe 1. Die Rillenwand 11 bildet die zur Umfangsrille 3 hin gerichtete Flanke der Profilblockelemente 5 der Profilblockreihe 2. Die Umfangsrille 3 ist mit einer ausgehend vom tiefsten Punkt des Rillengrundes 3 bis zu der die Bodenkontaktoberfläche bildenden Mantelfläche 9 gemessenen Profiltiefe Pₜ ausgebildet.

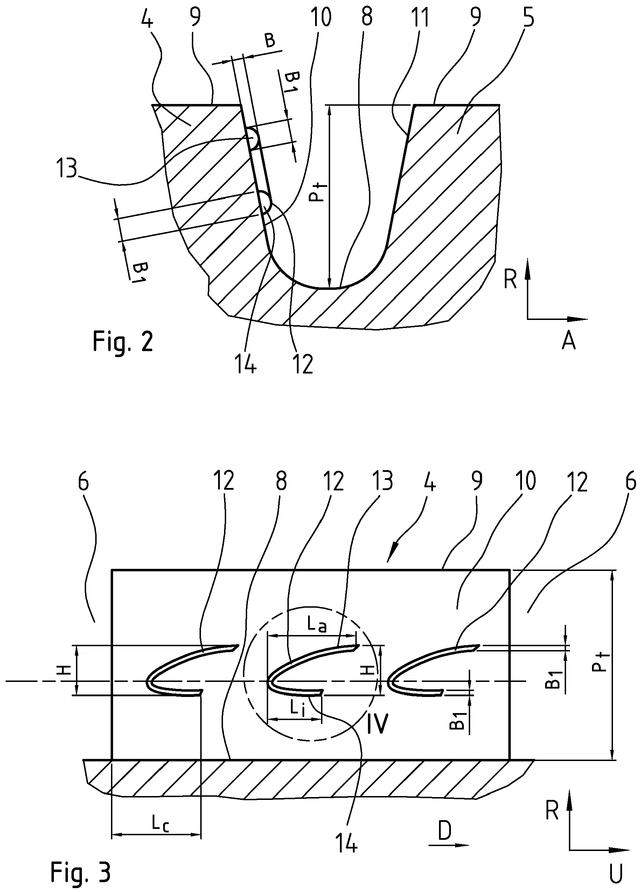

Wie in den Figuren 2 und 3 zu erkennen ist, sind in der Rillenwand 10 jeweils mit radialem Abstand zum Rillengrund 8 und mit radialem Abstand zu der die Bodenkontaktoberfläche bildenden Mantelfläche 9 am Neureifen längs der Erstreckung des Profilblockelementes 4 in Umfangsrichtung U hintereinander angeordnet, mehrere - im dargestellten Ausführungsbeispiel drei - aus der ansonsten im Wesentlichen glatten Oberfläche der Rillenwand 10 in die Umfangsrille 3 hinein erstreckte linienförmige Erhebungen 12 ausgebildet mit einer senkrecht zur glatten Oberfläche gemessenen Erstreckungshöhe B. Die linienförmige Erhebungen 12 erstrecken sich über ein in radialer Richtung R des Fahrzeugluftreifens gemessene radiale Erstreckungshöhe H. Die linienförmige Erhebung 12 ist dabei jeweils aus einem radial äußeren Erstreckungsbereich 13 und aus einem radial inneren Erstreckungsbereich 14 ausgebildet. Der radial äußere Erstreckungsbereich 13 erstreckt sich ausgehend vom radial äußeren Erstreckungsende der linienförmigen Erhebung 12 nach radial innen in Richtung des radial inneren Erstreckungsendes mit einer Umfangsrichtungskomponente entgegen der Drehrichtung D bei Vorwärtsfahrt (und somit in Drehrichtung des Fahrzeugluftreifens bei Rückwärtsfahrt) des montierten Fahrzeugreifens im Betriebszustand über eine in Umfangsrichtung U gemessene Erstreckungslänge Lₐ bis zum radial inneren Erstreckungsabschnitt 14. Der radial innere Erstreckungsabschnitt 14 erstreckt sich ausgehend vom radial inneren Erstreckungsende der linienförmigen Erhebung 12 nach radial außen in Richtung des radial äußeren Erstreckungsendes mit einer Umfangsrichtungskomponente entgegen der Drehrichtung D bei Vorwärtsfahrt (und somit in Drehrichtung des Fahrzeugluftreifens bei Rückwärtsfahrt) über eine Erstreckungslänge L_{I} bis zum radial äußeren Erstreckungsabschnitt und geht dann in den äußeren Erstreckungsabschnitt 13 über.

Die linienförmige Erhebung 12 weist dabei in der Schnittebene mit der Rillenwand 10 ihre maximale, jeweils senkrecht zur Erstreckungsrichtung der linienförmigen Erhebung 12 gemessene Breite B₁ auf.

Die Erstreckungshöhe B und die Breite B₁ der linienförmigen Erhebung 12 sind mit 0,3 mm ≤ B ≤ 1,5mm bzw. mit 0,3 mm ≤ B₁ ≤ 1,5 mm ausgebildet. In besonderen Ausführungen sind die linienförmigen Erhebungen 12 mit 0,5 mm ≤ B ≤ 0,7 mm bzw. mit 0,5 mm ≤ B₁ ≤ 0,7mm ausgebildet. Im dargestellten Ausführungsbeispiel ist B = B₁ gewählt. Im dargestellten Ausführungsbeispiel ist B = B₁ = 0,6mm gewählt.

Die maximale Erstreckungshöhe H der linienförmigen Erhebung ist mit (1/3)P_{T} ≤ H ≤ 0,9P_{T} ausgebildet. Im dargestellten Ausführungsbeispiel ist H = 0,7 P_{T} gewählt.

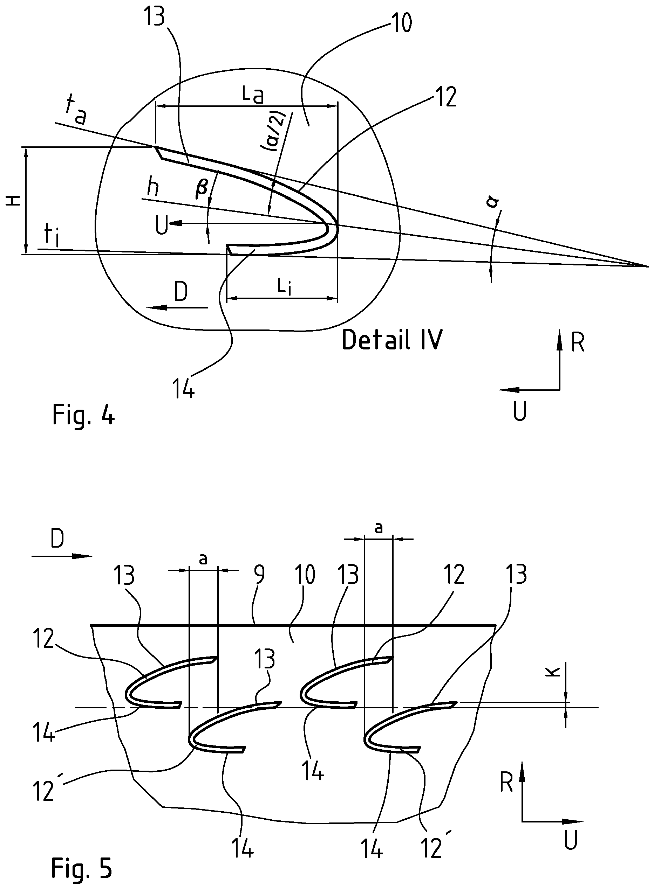

Wie in Fig. 4 zu erkennen ist, ist der radial äußere Erstreckungsbereich 13 zum radial inneren Erstreckungsbereich 14 hin gekrümmt verlaufend und der radial innere Erstreckungsbereich 14 zum radial äußeren Erstreckungsbereich 13 hin gekrümmt verlaufend ausgebildet, d.h. die Krümmung des radial äußeren Erstreckungsbereichs 13 ist um einen oder mehrere Krümmungsmittelpunkte, welche(r) auf der vom radial äußeren Erstreckungsbereich 13 zum radial inneren Erstreckungsbereich 14 hin gelegenen Seite liegt bzw. liegen, und der radial innere Erstreckungsbereich 14 ist um einen oder mehrere Krümmungsmittelpunkte, welche(r) auf der von der vom radial inneren Erstreckungsbereich 14 zum radial äußeren Erstreckungsbereich 13 hin gelegenen Seite liegt bzw. liegen, gekrümmt ausgebildet.

In Fig. 4 ist die im radial äußeren Erstreckungsende der linienförmigen Erhebung 12 an den Krümmungsverlauf des radial äußeren Erstreckungsabschnitts 13 gebildete Tangente tₐ in der Rillenwand 10 verlaufend und die im radial inneren Erstreckungsende der linienförmigen Erhebung 12 an den radial inneren Erstreckungsabschnitt 14 gebildete Tangente tᵢ in der Rillenwand 10 verlaufend eingezeichnet. Die beiden Tangenten tₐ und tᵢ schließen einen Winkel α ein mit α < 90°. Der Winkel α ist in den dargestellten Ausführungsbeispielen mit 30°≤ α ≤ 60° ausgebildet.

Wie in Fig. 4 dargestellt ist, ist die zwischen den beiden Tangenten tᵢ und tₐ den Winkel α halbierende Gerade h in ihrem Schnittpunkt mit der linienförmigen Erhebung 12 unter Einschluss eines Winkel ß zur Umfangsrichtung U mit 80°≥ ß > 0° ausgebildet und erstreckt sich in Drehrichtung D unter Zunahme ihrer radialen Position im Fahrzeugluftreifen. In den gezeigten Ausführungsbeispielen ist ß mit 45° ≥ ß > 5° ausgebildet. In dem in den Figuren 3 und 4 dargestellten Ausführungsbeispiel ist ß = 10° gewählt.

Die linienförmige Erhebung 12 bildet mit dem radial äußeren Erstreckungsabschnitt 13 und dem radial inneren Erstreckungsabschnitt 14 eine hakenförmig verlaufende Erhebung 12, welche beim Drehen des Fahrzeugluftreifens in Drehrichtung D bei Vorwärtsfahrt mit dem radial äußeren Erstreckungsbereich 13 hakenförmig in Schnee, Matsch oder losen Untergrund eingreift und das Material in den zwischen radial äußeren Erstreckungsbereich 13 und radial inneren Erstreckungsbereich 14 gebildete Art Schaufel einführt und zur Erhöhung der Traktion beiträgt.

Die Erstreckungslänge Lₐ des radial äußeren Erstreckungsbereichs 13 ist größer gewählt als die Erstreckungslänge L_{I} des radial inneren Erstreckungsbereichs 14. Die Erstreckungslänge Lₐ ist mit (0,6 H) ≥ Lₐ ≥ (0,15 H) und die Erstreckungslänge Lᵢ ist mit Lₐ ≥ Lᵢ ≥ (0,1 H) ausgebildet.

Im dargestellten Ausführungsbeispiel ist Lₐ = 0,3H und Lᵢ = 0,2H gewählt.

In den Figuren 3 und 4 sind die linienförmigen Erhebungen mit der Kontur ihres linienförmigen Verlaufes U-förmig ausgebildet.

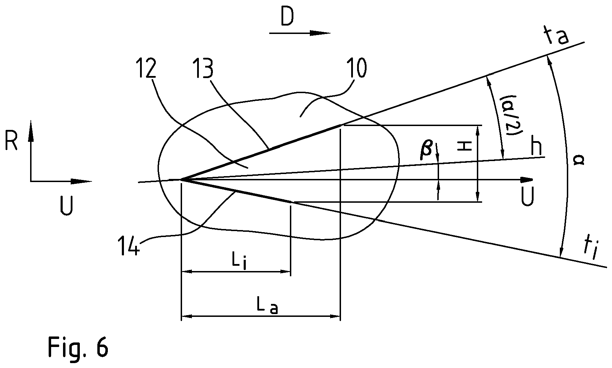

Fig. 6 zeigt ein alternatives Ausführungsbeispiel, bei dem die linienförmigen Erhebungen 12 mit der Kontur ihres linienförmigen Verlaufes V-förmig ausgebildet sind, wobei der radial äußere Erstreckungsbereich 13 den einen geradlinig ausgebildeten Schenkel und der radial inneren Erstreckungsbereich 14 den anderen, ebenfalls geradlinig ausgebildeten Schenkel der V-Form bildet. In diesem Ausführungsbeispiel bildet die Tangente tₐ den radial äußeren Schenkel 13 und die Tangente tᵢ den radial inneren Schenkel 14. Im dargestellten Ausführungsbeispiel ist α = 45° und ß = 10° gewählt.

Die Figur 3 zeigt ein Ausführungsbeispiel, bei dem die in Umfangsrichtung U hintereinander angeordneten linienförmigen Erhebungen 12 jeweils eine gleiche Erstreckungshöhe H in radialer Richtung R aufweisen.

In anderer - nicht dargestellter -Ausführung weisen zumindest einzelne der linienförmigen Erhebungen 12 zu einander unterschiedliche Erstreckungshöhen H auf.

In der in Fig. 3 dargestellten Ausführung sind die linienförmigen Erhebungen 12 jeweils in gleicher radialer Position des Reifens in der Rillenwand 10 ausgebildet.

Fig. 5 zeigt ein Ausführungsbeispiel mit ersten linienförmigen Erhebungen 12 mit radial äußerem Erstreckungsbereich 13 und mit radial innerem Erstreckungsbereich 14 und mit zweiten linienförmigen Erhebungen 12' mit radial äußerem Erstreckungsbereich 13 und mit radial innerem Erstreckungsbereich 14. Dabei sind in alternierender Reihenfolge jeweils ein linienförmiges Erhebungselement 12 und ein linienförmiges Erhebungselement 12' in Umfangsrichtung U des Fahrzeugluftreifens hintereinander angeordnet ausgebildet. In diesem Ausführungsbeispiel sind die linienförmigen Erhebungen 12' mit ihrer radialen Position im Fahrzeugluftreifen jeweils radial unterhalb der radialen Position der linienförmigen Erhebungen 12 angeordnet ausgebildet.

In anderer ebenfalls in Fig. 5 dargestellter Ausführung, sind die in Umfangsrichtung hintereinander angeordneten linienförmigen Erhebungen 12 und 12' in ihrer Umfangsposition mit einer in Umfangsrichtung U des Fahrzeugluftreifens gemessene Erstreckungslänge a sich überschneidend angeordnet.

In weiterer in Fig. 5 dargestellter Ausführungsform sind die in Umfangsrichtung U hintereinander angeordneten linienförmigen Erhebungen 12 und 12' jeweils in ihrer radialen und in ihrer Umfangsposition zueinander versetzt ausgebildet, wobei die in Umfangsrichtung hintereinander angeordneten linienförmigen Erhebungen 12 und 12' in ihrer Umfangsposition mit einer in Umfangsrichtung U des Fahrzeugluftreifens gemessene Erstreckungslänge a sich überschneidend angeordnet sind mit a < Lₐ.

Darüber hinaus sind die linienförmigen Erhebungen 12' in ihrer Position über die in radialer Richtung R gemessene Erstreckungslänge k mit der Position der linienförmigen Erhebungen 12 überlappend ausgebildet mit k < H.

In einer anderen, nicht dargestellten Ausführung sind auch in der Rillenwand 11 linienförmige Erhebungen 12 in einer der oben genannten Ausführungen ausgebildet.

### Bezugszeichenliste

### (Teil der Beschreibung)

- 1: Profilblockreihe
- 2: Profilblockreihe
- 3: Umfangsrille
- 4: Profilblockelement
- 5: Profilblockelement
- 6: Querrille
- 7: Querrille
- 8: Rillengrund
- 9: nach radial außen begrenzende Oberfläche
- 10: Rillenwand
- 11: Rillenwand
- 12: Linienförmige Erhebung
- 13: Radial äußerer Erstreckungsabschnitt
- 14: Radial innerer Erstreckungsabschnitt

## Patentansprüche

1. Laufstreifenprofil eines Fahrzeugluftreifens mit radial erhabenen Profilelementen (4,5) und mit Rillen (3), welche die Profilelemente (4,5) in axialer Richtung A des Reifens voneinander trennen und welche jeweils mit zwei in radialer Richtung R des Fahrzeugreifens aus dem Rillengrund (8) bis zu der die Straßenkontaktoberfläche bildenden Mantelfläche (9) des Fahrzeugreifens sich erstreckenden Rillenwänden (10,11) ausgebildet sind, von denen jeweils eine Rillenwand (10,11) die zur Rille (3) hin weisende Flanke eines der durch die Rille (3) von einander getrennten Profilelemente (4,5) bildet,
wobei in wenigstens einer Rillenwand (10) eine aus der Rillenwand (10) in die Rille (3) hinein ragende Erhebung (12) ausgebildet ist, die sich zwischen einem radial äußeren und einem radial inneren Erstreckungsende linienförmig in radialer Richtung R von radial innen nach radial außen auf der Rillenwand (10) erstreckt und die aus einem radial inneren Erstreckungsabschnitt (14) und aus einem sich daran anschließenden radial äußeren Erstreckungsabschnitt (13) ausgebildet ist, wobei sich der radial äußere Erstreckungsabschnitt (13) vom radial äußeren Erstreckungsende der linienförmigen Erhebung (12) in radialer Richtung R nach innen mit einer Erstreckungsrichtungskomponente in Umfangsrichtung U mit Orientierung in eine erste Drehrichtung (D) des Fahrzeugreifens bis zum radial inneren Erstreckungsabschnitt (14) erstreckt und
wobei der radial innere Erstreckungsabschnitt (14) sich vom radial inneren Erstreckungsende der linienförmigen Erhebung (12) in radialer Richtung R nach außen mit einer Erstreckungsrichtungskomponente in Umfangsrichtung U mit Orientierung in diese erste Drehrichtung (D) des Fahrzeugreifens bis zum radial äußeren Erstreckungsabschnitt (13) erstreckt, **dadurch gekennzeichnet,**
**dass** die im radial äußeren Erstreckungsende an den äußeren Erstreckungsabschnitt (13) angelegte Tangente tₐ und die im radial inneren Erstreckungsende an den inneren Erstreckungsabschnitt (14) angelegte Tangente tᵢ einen Öffnungswinkel α einschließen und die diesen Öffnungswinkel α Halbierende h ausgehend vom Schnittpunkt der beiden Tangenten tₐ, tᵢ in Richtung der beiden Erstreckungsenden in radialer Richtung R des Reifens ansteigt und einen Winkel β zur Umfangsrichtung U einschließt mit 80° ≥ β > 0°.

2. Laufstreifenprofil gemäß den Merkmalen von Anspruch 1,
wobei die erste Drehrichtung (D) die Drehrichtung des - insbesondere drehrichtungsgebundenen - Fahrzeugreifens bei Rückwärtsfahrt ist.

3. Laufstreifenprofil gemäß den Merkmalen von Anspruch 1 oder 2,
wobei wenigstens einer der beiden - insbesondere beide - Erstreckungsabschnitte (13,14) geradlinig verlaufend ausgebildet ist.

4. Laufstreifenprofil gemäß den Merkmalen von Anspruch 3,
wobei die linienförmige Erhebung (12) mit einem V-förmigen Konturverlauf ausgebildet ist, bei dem jeder der beiden Erstreckungsabschnitte (13,14) jeweils einen Schenkel der V-Form bildet.

5. Laufstreifenprofil gemäß den Merkmalen von Anspruch 1 oder 2,
wobei wenigstens einer der beiden - insbesondere beide - Erstreckungsabschnitte (13,14) zum anderen Erstreckungsabschnitt (14,13) hin gekrümmt verlaufend ausgebildet ist.

6. Laufstreifenprofil gemäß den Merkmalen von Anspruch 5,
wobei die linienförmige Erhebung (12) mit einem U-förmigen Konturverlauf ausgebildet ist, bei dem jeder der beiden Erstreckungsabschnitte (13,14) jeweils einen Schenkel der U-Form bildet.

7. Laufstreifenprofil gemäß den Merkmalen von einem oder mehreren der vorangegangenen Ansprüche,
wobei die Erstreckungslänge Lₐ des radial äußeren Erstreckungsabschnitts (13) der linienförmigen Erhebung (12) größer ist als die Erstreckungslänge Li des radial inneren Erstreckungsabschnitts (14).

8. Laufstreifenprofil gemäß den Merkmalen von einem oder mehreren der vorangegangenen Ansprüche,
wobei die im radial äußeren Erstreckungsende an den äußeren Erstreckungsabschnitt (13) angelegte Tangente tₐ und die im radial inneren Erstreckungsende an den inneren Erstreckungsabschnitt (14) angelegte Tangente tᵢ einen Öffnungswinkel α einschließen mit 90°> α, insbesondere mit 60° **≥** α **≥** 30°.

9. Laufstreifenprofil gemäß den Merkmalen von einem oder mehreren der vorangegangenen Ansprüche,
wobei die im radial äußeren Erstreckungsende an den äußeren Erstreckungsabschnitt (13) angelegte Tangente tₐ und die im radial inneren Erstreckungsende an den inneren Erstreckungsabschnitt (14) angelegte Tangente tᵢ einen Öffnungswinkel α einschließen und die diesen Öffnungswinkel α Halbierende h ausgehend vom Schnittpunkt der beiden Tangenten tₐ, tᵢ in Richtung der beiden Erstreckungsenden in radialer Richtung R des Reifens ansteigt und einen Winkel β zur Umfangsrichtung U einschließt mit 45° ≥ β > 5°.

10. Laufstreifenprofil gemäß den Merkmalen von einem oder mehreren der vorangegangenen Ansprüche,
wobei in der Rillenwand (10) über den Umfang des Fahrzeugreifens verteilt mehrere derartige in die Rille (3) hinein ragende erhabene Erhebungen (12,12') ausgebildet sind, - die insbesondere in ihrer radialen Position im Reifen zumindest teilweise unterschiedlich ausgebildet sind.

## Claims

1. Tread profile of a pneumatic vehicle tyre with radially raised profile elements (4, 5) and with grooves (3), which separate the profile elements (4, 5) in the axial direction A of the tyre and which are respectively formed with two groove walls (10, 11) extending in the radial direction R of the vehicle tyre from the groove base (8) to the lateral surface (9) of the vehicle tyre that forms the road contact surface, one groove wall (10, 11) of which in each case forms the flank facing the groove (3) of one of the profile elements (4, 5) that are separated from one another by the groove (3),
an elevation (12) being formed in at least one groove wall (10), protruding from the groove wall (10) into the groove (3), extending linearly on the groove wall (10) in the radial direction R from the radial inside to the radial outside between a radially outer end of extent and a radially inner end of extent, and being formed by a radially inner portion of extent (14) and a radially outer portion of extent (13) adjoining thereto,
the radially outer portion of extent (13) extending inwardly from the radially outer end of extent of the linear elevation (12) in the radial direction R with a component of the direction of extent in the circumferential direction U with orientation in a first direction of rotation (D) of the vehicle tyre as far as the radially inner portion of extent (14) and
the radially inner portion of extent (14) extending outwardly from the radially inner end of extent of the linear elevation (12) in the radial direction R with a component of the direction of extent in the circumferential direction U with orientation in this first direction of rotation (D) of the vehicle tyre as far as the radially outer portion of extent (13),
**characterized**
**in that** the tangent tₐ to the outer portion of extent (13) at the radially outer end of extent and the tangent tᵢ to the inner portion of extent (14) at the radially inner end of extent form an opening angle α and the bisector h of this opening angle α rises from the point of intersection of the two tangents tₐ, tᵢ in the direction of the two ends of extent in the radial direction R of the tyre and forms an angle β with the circumferential direction U where 80° ≥ β > 0°.

2. Tread profile according to the features of Claim 1, the first direction of rotation (D) being the direction of rotation of the - in particular directionally dependent - vehicle tyre during reversing.

3. Tread profile according to the features of Claim 1 or 2,
at least one of the two - in particular both - portions of extent (13, 14) being formed as running in a straight line.

4. Tread profile according to the features of Claim 3, the linear elevation (12) being formed with a V-shaped contour profile, in which each of the two portions of extent (13, 14) respectively forms a leg of the V shape.

5. Tread profile according to the features of Claim 1 or 2,
at least one of the two - in particular both - portions of extent (13, 14) being formed as running in a curved manner to the other portion of extent (14, 13).

6. Tread profile according to the features of Claim 5, the linear elevation (12) being formed with a U-shaped contour profile, in which each of the two portions of extent (13, 14) respectively forms a leg of the U shape.

7. Tread profile according to the features of one or more of the preceding claims,
the length of extent Lₐ of the radially outer portion of extent (13) of the linear elevation (12) being greater than the length of extent Lᵢ of the radially inner portion of extent (14).

8. Tread profile according to the features of one or more of the preceding claims,
the tangent tₐ to the outer portion of extent (13) at the radially outer end of extent and the tangent tᵢ to the inner portion of extent (14) at the radially inner end of extent forming an opening angle α where 90 ° > α, in particular where 60° ≥ α ≥ 30°.

9. Tread profile according to the features of one or more of the preceding claims,
the tangent tₐ to the outer portion of extent (13) at the radially outer end of extent and the tangent tᵢ to the inner portion of extent (14) at the radially inner end of extent forming an opening angle α and the bisector h of this opening angle α rising from the point of intersection of the two tangents tₐ, tᵢ in the direction of the two ends of extent in the radial direction R of the tyre and forming an angle β with the circumferential direction U where 45° ≥ β > 5°.

10. Tread profile according to the features of one or more of the preceding claims,
a number of such raised elevations (12, 12') that protrude into the groove (3) being formed in the groove wall (10), distributed over the circumference of the vehicle tyre and at least to some extent formed differently, in particular in their radial position in the tyre.

## Revendications

1. Profil de bande de roulement d'un bandage pneumatique de véhicule, comprenant des éléments profilés rehaussés radialement (4, 5) et des rainures (3), qui séparent les uns des autres les éléments profilés (4, 5) dans la direction axiale A du bandage pneumatique et qui sont réalisées à chaque fois avec deux parois de rainure (10, 11) s'étendant dans la direction radiale R du pneu du véhicule depuis la base de rainure (8) jusqu'à la surface d'enveloppe (9) du pneu du véhicule formant la surface en contact avec la route, dont à chaque fois une paroi de rainure (10, 11) forme le flanc tourné vers la rainure (3) de l'un des éléments profilés (4, 5) séparés les uns des autres par la rainure (3),
un rehaussement (12) faisant saillie depuis la paroi de rainure (10) dans la rainure (3) étant réalisé dans au moins une paroi de rainure (10), lequel rehaussement s'étend entre une extrémité d'étendue radialement extérieure et une extrémité d'étendue radialement intérieure sous forme linéaire dans la direction radiale R radialement depuis l'intérieur vers l'extérieur sur la paroi de rainure (10) et lequel est réalisé à partir d'une portion d'étendue radialement intérieure (14) et à partir d'une portion d'étendue radialement extérieure (13) s'y raccordant, la portion d'étendue radialement extérieure (13) s'étendant depuis l'extrémité d'étendue radialement extérieure du rehaussement de forme linéaire (12) dans la direction radiale R vers l'intérieur avec une composante directionnelle d'étendue dans la direction périphérique U avec une orientation dans un premier sens de rotation (D) du pneu du véhicule jusqu'à la portion d'étendue radialement intérieure (14) et
la portion d'étendue radialement intérieure (14) s'étendant depuis l'extrémité d'étendue radialement intérieure du rehaussement de forme linéaire (12) dans la direction radiale R vers l'extérieur avec une composante directionnelle d'étendue dans la direction périphérique U avec une orientation dans ce premier sens de rotation (D) du pneu du véhicule jusqu'à la portion d'étendue radialement extérieure (13),
**caractérisé en ce que**
la tangente tₐ à la portion d'étendue extérieure (13) dans l'extrémité d'étendue radialement extérieure et la tangente tᵢ à la portion d'étendue intérieure (14) dans l'extrémité d'étendue radialement intérieure forment un angle d'ouverture α et la bissectrice h de cet angle d'ouverture α partant du point d'intersection des deux tangentes tₐ, tᵢ monte dans la direction des deux extrémités d'étendue dans la direction radiale R du pneu et forme un angle β par rapport à la direction périphérique U, avec 80° ≥ β > 0°.

2. Profil de bande de roulement selon les caractéristiques de la revendication 1,
dans lequel le premier sens de rotation (D) est le sens de rotation du pneu du véhicule - notamment lié au sens de rotation - en conduite en marche arrière.

3. Profil de bande de roulement selon les caractéristiques de la revendication 1 ou 2, dans lequel au moins l'une des deux - en particulier les deux - portions d'étendue (13, 14) sont réalisées de manière à s'étendre en ligne droite.

4. Profil de bande de roulement selon les caractéristiques de la revendication 3, dans lequel le rehaussement de forme linéaire (12) est réalisé avec une allure de contour en forme de V, dans laquelle chacune des deux portions d'étendue (13, 14) forme à chaque fois une branche de la forme en V.

5. Profil de bande de roulement selon les caractéristiques de la revendication 1 ou 2, dans lequel au moins l'une des deux - en particulier les deux - portions d'étendue (13, 14) sont réalisées de manière à s'étendre sous forme courbée vers l'autre portion d'étendue (14, 13).

6. Profil de bande de roulement selon les caractéristiques de la revendication 5, dans lequel le rehaussement de forme linéaire (12) est réalisé avec une allure de contour en forme de U, dans laquelle chacune des deux portions d'étendue (13, 14) forme à chaque fois une branche de la forme en U.

7. Profil de bande de roulement selon les caractéristiques de l'une ou plusieurs des revendications précédentes, dans lequel la longueur d'étendue Lₐ de la portion d'étendue radialement extérieure (13) du rehaussement de forme linéaire (12) est supérieure à la longueur d'étendue Lᵢ de la portion d'étendue radialement intérieure (14).

8. Profil de bande de roulement selon les caractéristiques d'une ou plusieurs des revendications précédentes, dans lequel la tangente tₐ à la portion d'étendue extérieure (13) dans l'extrémité d'étendue radialement extérieure et la tangente tᵢ à la portion d'étendue intérieure (14) dans l'extrémité d'étendue radialement intérieure forment un angle d'ouverture α avec 90° > α, en particulier avec 60° ≥ α ≥ 30°.

9. Profil de bande de roulement selon les caractéristiques d'une ou plusieurs des revendications précédentes, dans lequel la tangente tₐ à la portion d'étendue extérieure (13) dans l'extrémité d'étendue radialement extérieure et la tangente tᵢ à la portion d'étendue intérieure (14) dans l'extrémité d'étendue radialement intérieure forment un angle d'ouverture α et la bissectrice h de cet angle d'ouverture α partant du point d'intersection des deux tangentes tₐ, tᵢ monte dans la direction des deux extrémités d'étendue dans la direction radiale R du pneu et forme un angle β par rapport à la direction périphérique U, avec 45° ≥ β > 5°.

10. Profil de bande de roulement selon les caractéristiques d'une ou plusieurs des revendications précédentes, dans lequel plusieurs rehaussements de ce type (12, 12') rehaussés en saillie à l'intérieur de la rainure (3) et répartis sur la périphérie du pneu du véhicule sont réalisés dans la paroi de rainure (10), lesquels sont notamment réalisés au moins en partie différemment dans leur position radiale dans le pneu.
